# FASCICULE DE BREVET EUROPEEN

(11) **EP 2 544 931 B1**
(45) Date de publication et mention de la délivrance du brevet: **14.09.2016**
(21) Numéro de dépôt: 11712167.3
(22) Date de dépôt: 11.03.2011
(51) Int. Cl.: B60T 8/17

(54) **SYSTEME DE FREINAGE POUR AERONEF EQUIPE DE FREINS ELECTROMECANIQUES**
BREMSSYSTEM FÜR EIN MIT ELEKTROMECHANISCHEN BREMSEN AUSGESTATTETES FLUGZEUG
BRAKING SYSTEM FOR AN AIRCRAFT FITTED WITH ELECTROMECHANICAL BRAKES

(30) Priorité: 12.03.2010 FR 1051798
(43) Date de publication de la demande: 16.01.2013
(73) Titulaire: Messier-Bugatti-Dowty, 78140 Vélizy-Villacoublay (FR)
(72) Inventeur: THIBAULT, Julien, 91190 GIF SUR YVETTE (FR); COLIN, Emmanuel, 78140 VELIZY-VILLACOUBLAY (FR); MUDRY, Stéphane, 78140 VELIZY-VILLACOUBLAY (FR)
(74) Mandataire: Parzy, Benjamin Alain
(86) Numéro de dépôt international: PCT/EP2011/001217
(87) Numéro de publication internationale: WO 2011/110363

(56) Documents cités:
- EP-A1- 1 498 332
- EP-A1- 1 679 242
- EP-A1- 1 681 220
- US-A1- 2001 045 771

## Description

L'invention est relative à un procédé de gestion d'un système de freinage pour aéronef équipé de freins électromécaniques.

### ARRIERE-PLAN TECHNOLOGIQUE DE L'INVENTION

Les systèmes de freinage des aéronefs sont en général conçus pour fonctionner selon plusieurs modes :
- un mode normal lors duquel un calculateur de freinage génère une consigne de freinage à destination d'organes distributeurs de puissance (servovalve pression dans le cas d'un freinage hydraulique, contrôleur ou EMAC dans le cas d'un freinage électromécanique) qui envoie vers les actionneurs de freinage une puissance calibrée ;
- un mode alterné lors duquel le circuit de puissance primaire est défaillant, et la puissance est prélevée sur un deuxième circuit de puissance ;
- un mode de secours lors duquel le calculateur de freinage est défaillant, l'ordre de freinage étant transmis directement des pédales vers les organes distributeurs, donc sans protection d'antiglissement. En général, la puissance disponible aux freins est volontairement limitée pour éviter le blocage des roues ;
- enfin, en dernière extrémité, un mode ultime de freinage qui consiste à utiliser le freinage de parc pour ralentir l'aéronef.

On rappelle que pour les aéronefs à frein hydraulique, le freinage de parc consiste à mettre en communication les cavités des freins avec un accumulateur dont la seule pression permet de développer un effort de parc immobilisant l'aéronef. Le freinage de parc (et donc le freinage ultime) est prioritaire par rapport aux autres modes de freinage, et cette priorité est en pratique réalisée très simplement à l'aide d'un clapet navette disposé en amont des freins, pour mettre ceux-ci en relation soit avec la sortie de l'accumulateur de parc, soit avec la sortie de la servovalve pression commandée par le calculateur de freinage. Pour être certain que la priorité soit respectée, la pression de l'accumulateur de parc est en général importante, de sorte qu'elle impose la commutation du clapet navette, même si la servovalve pression tente d'imposer sa propre pression. On remarquera qu'en amont du clapet navette, les deux chaînes de commande (calculateur de freinage/sélecteur de parc) sont complètement séparées, pour assurer une ségrégation la plus complète possible.

Dans le domaine des aéronefs à freins électriques, la situation n'est pas aussi simple. Le freinage de parc s'obtient en effet en commandant l'application d'un effort par les actionneurs électromécaniques de freinage, puis en commandant le blocage des actionneurs en position.

Un tel système est décrit dans le document EP 1 498 332 A1.

Il est tentant d'utiliser, comme dans les systèmes de freinage hydraulique, le freinage de parc comme un freinage ultime permettant de ralentir l'aéronef lorsque tous les autres moyens de freinage sont devenus indisponibles. Cependant, si pour une raison quelconque, l'événement qui avait conduit à l'utilisation du freinage de parc comme freinage ultime disparaît (par exemple réinitialisation réussie du calculateur de freinage qui redevient opérationnel), le blocage des actionneurs peut être problématique. En effet, la logique de blocage, pour des raisons de ségrégation, n'est en général pas commandée par le calculateur de freinage, et celui-ci n'a aucun moyen de débloquer les actionneurs. Si le pilote ne pense pas à manoeuvrer le sélecteur de parc pour annuler l'ordre de parc, les actionneurs restent ainsi bloqués.

### OBJET DE L'INVENTION

L'invention a pour objet de profiter au maximum des possibilités nouvelles offertes par la technologie électrique pour offrir un mode de freinage ultime ne présentant pas les risques ci-dessus évoqués.

### BREVE DESCRIPTION DE L'INVENTION

En vue de la réalisation de ce but, on propose un système de freinage pour un aéronef à freins électriques comportant un certain nombre d'actionneurs électromécaniques, le système comportant un calculateur de freinage délivrant une consigne de freinage normal à destination d'un ou de plusieurs contrôleurs des actionneurs, et des moyens de sélection pour faire fonctionner le système de freinage selon plusieurs modes parmi lesquels :
- un mode normal de freinage lors duquel le calculateur de freinage génère une consigne de freinage à destination du ou des contrôleurs ;
- un mode de freinage ultime, prioritaire sur le mode normal de freinage, appliqué en réponse à un actionnement d'un organe de commande de parc et dans lequel les actionneurs sont commandés pour appliquer un effort en réponse à l'actionnement de l'organe de commande de parc, mais ne sont pas bloqués en position ;
- un mode de freinage de parc, appliqué en réponse à un actionnement d'un organe de commande de parc et uniquement si l'aéronef est à l'arrêt, dans lequel les actionneurs sont commandés pour appliquer un effort en réponse à l'actionnement de l'organe de commande de parc puis sont bloqués en position.

Ainsi, avant de provoquer le blocage des actionneurs, on vérifie si l'aéronef roule encore ou est immobilisé. Si l'aéronef roule, alors il faut comprendre que le pilote cherche à utiliser le freinage de parc comme un freinage ultime destiné à ralentir l'aéronef. On évite alors de bloquer les actionneurs, ce qui permet éventuellement au calculateur de freinage de reprendre la main, même avec l'organe de commande de parc actionné. Ce n'est que si l'aéronef est immobilisé que l'on peut bloquer les actionneurs, pour assurer un véritable freinage de parc.

Selon un mode particulier de réalisation, on utilise comme organe de commande de parc un organe du type levier ayant une course permettant de doser le freinage ultime entre zéro et un effort maximal de freinage ultime, celui-ci n'étant appliqué que lorsque le levier atteint ou dépasse une course critique.

Ainsi, non seulement on évite le blocage inutile des actionneurs, mais on offre en outre un nouveau mode de freinage ultime dans lequel le pilote peut doser le freinage. On remarquera que dans le mode ultime hydraulique, la pression imposée est celle de l'accumulateur, et il n'est pas possible de doser le freinage.

### BREVE DESCRIPTION DES DESSINS

L'invention sera mieux comprise à la lumière de la description qui suit de modes de mises en oeuvre particuliers du procédé de l'invention, en référence aux figures des dessins annexés parmi lesquelles :
- la figure 1 est une vue schématique d'une architecture de système de freinage pour aéronef selon un premier mode de mise en oeuvre du procédé de l'invention ;
- la figure 2 est un diagramme d'effort d'un levier de parc pouvant être utilisé avec l'architecture de la figure 1 ;
- la figure 3 est une vue schématique d'une architecture de système de freinage pour aéronef selon un deuxième mode de mise en oeuvre du procédé de l'invention ;
- la figure 4 est une vue schématique d'une architecture de système de freinage pour aéronef selon un troisième mode de mise en oeuvre du procédé de l'invention.

### DESCRIPTION DETAILLEE DE L'INVENTION

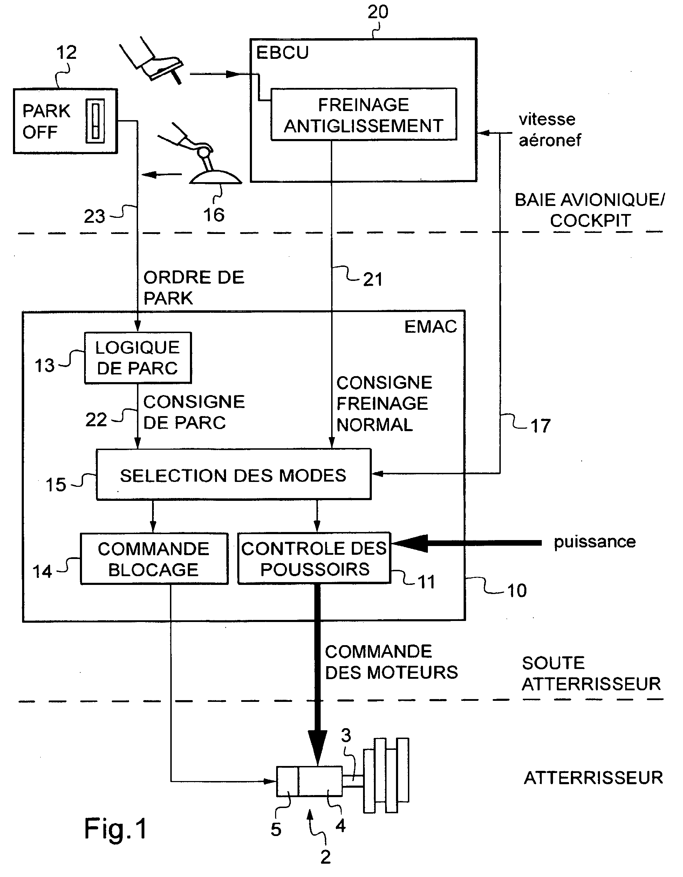

En référence à la figure 1, l'architecture vise à contrôler des freins électromécaniques comportant chacun un certain nombre d'actionneurs électromécaniques 2 adaptés à presser sélectivement une pile de disques en regard. Chaque actionneur 2 comporte un poussoir 3 manoeuvré par un moteur électrique 4 et est équipé d'un organe de blocage de parc 5 permettant de bloquer le poussoir 3 en position lorsque l'actionneur a été commandé pour exercer un effort de parc sur des disques.

Chaque actionneur 2 est relié à un contrôleur 10 ou EMAC (pour Electromechanical Actuator Controller) qui est chargé de distribuer une puissance électrique à destination du moteur 4 de l'actionneur en réponse à une consigne de freinage 21 générée par un calculateur de freinage 20 ou EBCU (pour Electronic Braking Control Unit). A cet effet, le contrôleur 10 comporte un module de contrôle 11, comprenant essentiellement un onduleur recevant de la puissance d'au moins un bus d'alimentation de l'avion et calibrant cette puissance en fonction de la consigne de freinage 21 pour délivrer au moteur du ou des actionneurs reliés au contrôleur une puissance suffisante pour que l'actionneur applique l'effort désiré.

La consigne de freinage 21 est générée soit par l'actionnement des pédales de freins, soit par l'actionnement d'une manette dite autobrake, commandant une décélération.

En pratique, le calculateur de freinage 20 est disposé dans la soute avionique de l'aéronef, tandis que l'EMAC 10 est de préférence disposé plus près des freins pour minimiser la longueur (et donc la masse) des câbles d'alimentation. De préférence, on placera chacun des EMACs 10 dans l'une des soutes des atterrisseurs principaux.

Le pilote a la possibilité de commander un freinage de parc en générant ordre de parc par la manoeuvre d'un sélecteur de parc 12 dont l'ordre est envoyé directement aux EMACs 10, sans passer par le calculateur de freinage 20. Chaque EMAC 10 intègre une logique de parc 13 consistant, en réponse à l'ordre de parc 23, à :
- délivrer une consigne de parc 22 de sorte que le module de contrôle des poussoirs 11 alimente les moteurs des actionneurs pour faire appliquer par ceux-ci un effort de parc déterminé ;
- commander sur chaque actionneur un organe de blocage des poussoirs 14 pour bloquer le poussoir en position après application de l'effort de parc;
- recommencer régulièrement les deux étapes précédentes pour ajuster l'effort de parc, celui-ci pouvant avoir diminué du fait notamment de dilatations subies par le frein.

L'EMAC est configuré pour donner priorité à l'ordre de parc provenant du sélecteur de parc 12 sur la consigne de freinage 21 provenant du calculateur de freinage 20. A cet effet, l'EMAC comporte une logique de sélection 15 des modes de freinage.

Selon l'invention, la logique de sélection 15 reçoit en entrée un signal de vitesse 17 indicatif d'un mouvement de l'aéronef. De préférence, la vitesse sera considérée comme nulle et le signal de vitesse changera d'état si la vitesse de l'aéronef est inférieure à un seuil donné, en pratique faible. Le signal de vitesse peut être la vitesse propre de l'aéronef, un signal indiquant la rotation des roues, ou encore toute combinaison de ces deux vitesses.

Grâce à ce signal de vitesse 17, la logique de sélection 15 est capable de distinguer entre un mode de parc, caractérisé par la manoeuvre du sélecteur de parc et par une vitesse nulle, un mode ultime de freinage caractérisé par la manoeuvre du sélecteur de parc et une vitesse non nulle, et, bien sûr, un mode normal de freinage lors duquel le sélecteur de parc n'est pas actionné tandis que le calculateur de freinage délivre une consigne de freinage, selon le tableaui suivant :

| | Consigne de freinage normal | Ordre de parc | Signal de vitesse |
|---|---|---|---|
| Mode normal | Oui | non | --- |
| Mode de parc | --- | oui | Non |
| Mode ultime | --- | oui | oui |

Ainsi, le module de sélection 15 donne la priorité au mode de parc et au mode ultime de freinage par rapport au mode de freinage normal commandé par le calculateur de freinage 20 dès qu'un ordre de parc est envoyé.

Dans le mode de freinage normal, le module de sélection 15 désactive le module de commande de l'organe de blocage 14, et active le module de contrôle des poussoirs 11 pour que le ou les actionneurs commandés appliquent un effort de freinage représentatif de la consigne de freinage générée par le calculateur de freinage 20.

Dans le mode de freinage ultime, le module de sélection 15 désactive le module de commande de l'organe de blocage 14, et active le module de contrôle des poussoirs 11 pour que le ou les actionneurs commandés appliquent un effort de freinage ultime.

Dans le mode de parc, le module de sélection 15 active le module de contrôle des poussoirs 11 pour que le ou les actionneurs commandés appliquent un effort de parc et active le module de commande de l'organe de blocage 14 pour permette le blocage des poussoirs des actionneurs.

Pour la clarté de la présentation de l'invention, on n'a pas ici représenté les autres modes de freinage, notamment le mode de freinage de secours dans lequel les ordres pédales sont envoyés directement au contrôleur 10.

Le mode ultime de freinage est très similaire au mode ultime de freinage dans les systèmes de freinages hydrauliques, si ce n'est qu'il est possible de ne pas appliquer dans le mode ultime le même effort de freinage que dans le mode de parc. On aura en effet intérêt à faire en sorte que l'effort de freinage en mode ultime Fult soit inférieur à l'effort de parc Fparc, pour éviter tout blocage des roues.

En variante, et selon un mode particulièrement avantageux de mise en oeuvre de l'invention, on utilise, plutôt que le sélecteur de parc 12, un levier 16 également représenté à la figure 1 (il faut bien sûr comprendre qu'il remplace le sélecteur de parc 12) présentant une course grâce à laquelle le pilote peut doser l'effort de freinage en mode ultime de freinage, l'ordre de parc n'étant véritablement donné par le pilote que lorsque le levier est amené au-delà d'une course donnée. A cet effet, le levier 16 est équipé d'un capteur permettant de connaître sa position (exprimé ici en pourcentage de la course maximale), ainsi qu'un contacteur de fin de course permettant de déceler que le levier a été amené en fin de course.

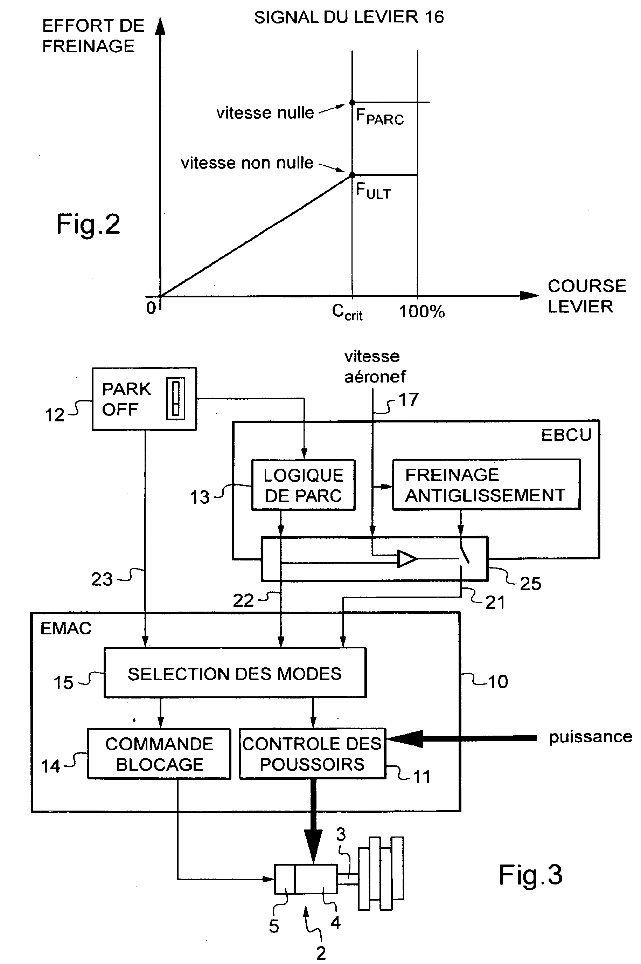

De préférence, et comme illustré à la figure 2, le contrôleur 10 interprète le signal provenant du levier 16 de la façon suivante. Tant que la course du levier est inférieure à une course critique Ccrit (par exemple 80%), l'effort appliqué est une proportion d'un effort maximal de freinage ultime donné Fult, proportion correspondant au pourcentage de la course maximale. Si la course du levier est égale à la course critique Ccrit, l'effort appliqué sera alors égal soit à l'effort Fult, si la vitesse est non nulle, soit l'effort Fparc, si la vitesse est nulle.

Ainsi, non seulement on crée un mode de freinage ultime (levier en fin de course, vitesse aéronef non nulle), mais en plus, on crée un deuxième mode de freinage de secours, non différentiel mais proportionnel, lors duquel le pilote peut doser l'effort de freinage au moyen du levier 16.

L'architecture présentée à la figure 1 tente ainsi de respecter la contrainte de ségrégation totale entre la commande de parc et le freinage normal. Cette ségrégation permet d'assurer qu'un dysfonctionnement du calculateur de freinage n'empêchera pas la mise en oeuvre des modes de parc ou de freinage ultime.

Néanmoins, une telle ségrégation oblige à disposer la logique de parc 13 dans l'EMAC 10. On peut cependant avoir intérêt à simplifier au maximum l'EMAC 10, dans le but de permettre sa disposition au plus près des freins, c'est-à-dire directement sur l'atterrisseur, voire sur le frein lui-même.

La figure 3 représente une architecture de système de freinage comportant un EMAC simplifié. Sur cette figure, on reconnaît le calculateur de freinage 20, l'EMAC 10 avec son module de sélection 15, son module de contrôle des poussoirs 11, ainsi que son module de commande de l'organe de blocage 14. Cependant, la logique de parc 13 a maintenant été déplacée pour être logée dans le calculateur de freinage.

Ainsi, l'ordre de parc provenant du sélecteur de parc 12 est maintenant fourni non seulement à l'EMAC 10, mais également au calculateur de freinage 20.

Dans le calculateur de freinage, il conviendra bien sûr de séparer le plus possible les moyens de génération de la consigne de freinage normal 21, et les moyens de génération de 1a consigne de parc. En pratique, on peut utiliser deux voies logicielles indépendantes, mises en oeuvre chacune par un processeur distinct.

Le fonctionnement de cette architecture est le suivant : en mode de freinage normal, le calculateur de freinage 20 délivre une consigne de freinage 21 à destination de l'EMAC 10. Le module de sélection 15 désactive le module de blocage 14 et active le module de contrôle des poussoirs 11 pour que celui-ci commande les actionneurs afin d'exercer un effort de freinage représentatif de la consigne de freinage.

Si le pilote manoeuvre le sélecteur de parc 12 (ou le levier de parc 16), alors le calculateur de génère, grâce à la logique de parc 13, une consigne de parc 22.

Celui-ci est envoyé au module de sélection 15, qui reçoit également directement le signal du sélecteur de parc 12.

Dans le mode de freinage ultime, le module de sélection 15 désactive le module de commande de l'organe de blocage 14, et active le module de contrôle des poussoirs 11 pour que le ou les actionneurs commandés appliquent un effort de freinage ultime.

Enfin, dans le mode de parc, le module de sélection 15 active le module de contrôle des poussoirs 11 pour que le ou les actionneurs commandés appliquent un effort de parc et active le module de commande de l'organe de blocage 14 pour permette le blocage des poussoirs des actionneurs.

Ici, et selon un aspect particulier de l'invention, le module de sélection reconnaît les modes de fonctionnement sans recourir au signal de vitesse 17.

Selon une première façon de sélectionner ces modes, on équipe le calculateur de freinage 20 d'un interrupteur commandé 25 inhibant la consigne de freinage normal 21 si une consigne de parc 22 est générée et si le signal de vitesse 17 est non nul.

Ainsi, lors d'un fonctionnement normal, alors que le pilote n'a pas manoeuvré le sélecteur de parc 12, la consigne de freinage normale 21 est délivrée normalement et parvient au module de sélection 15, qui comprend que le système de freinage est en mode de fonctionnement normal.

Si le pilote actionne le sélecteur de parc 12 alors que l'aéronef est en mouvement, l'interrupteur commandé 25 inhibe la consigne de freinage 21 qui n'arrive plus au module de sélection, alors que la consigne de parc 22 générée par la logique de parc 13 arrive au module de sélection 15. Celui-ci comprend alors que le système de freinage est en mode de freinage ultime.

Enfin, si le pilote actionne le sélecteur de parc 12 alors que l'aéronef est arrêté, l'interrupteur commandé 25 n'inhibe pas la consigne de freinage 21 qui parvient, parallèlement à la consigne de parc 22, au module de sélection 15. Celui-ci comprend alors que le système de freinage est en mode de freinage de parc.

Dans tous les cas, l'ordre de parc 23 provenant du sélecteur de parc 12 est transmis directement au module de sélection 15.

Ainsi, les modes de fonctionnements sont sélectionnés selon les critères suivants :

| | Consigne de freinage normal | Consigne de parc | Ordre de parc |
|---|---|---|---|
| Mode normal | oui | non | Non |
| Mode de parc | Non | oui | Oui |
| Mode ultime | Oui | oui | Oui |

L'interrupteur commandé 25 est de préférence de type matériel, de façon à fonctionner de façon sûre quelque soit les ordres envoyés de façon logicielle par le calculateur de freinage. La dissimilarité matériel/logiciel permet de retrouver une ségrégation qui ne pouvait plus être assurée du fait de l'intégration de la logique de parc dans le calculateur de freinage. En particulier, on remarquera que grâce à l'interrupteur matériel 25, le mode de freinage ultime est prioritaire tant que l'aéronef roule.

En variante, plutôt qu'un interrupteur qui coupe l'alimentation du calculateur de freinage, on pourra de fusible, coupant définitivement l'alimentation du calculateur de freinage (jusqu'à une intervention visant à rétablir l'alimentation du calculateur de freinage), pour éviter qu'une fois l'aéronef arrêté, le calculateur de freinage ne soit réalimenté et donne des ordres non désirés, par exemple de relâchement de l'effort de freinage. Il peut encore s'agir de moyens coupant la transmission des ordres du calculateur de freinage vers l'EMAC en réponse à la détection du signal de par cet d'une vitesse non nulle.

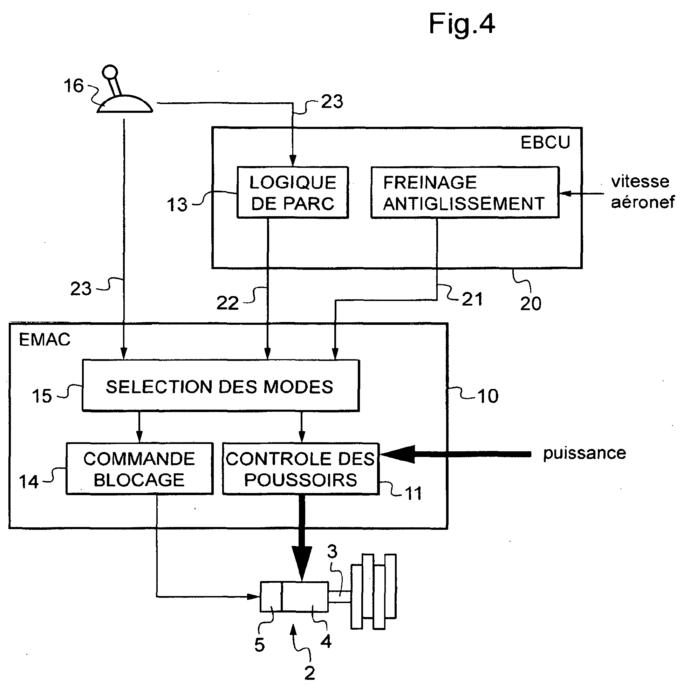

Bien sûr, le sélecteur de parc 12 peut, comme cela est illustré à la figure 4, être remplacé par un levier 16, permettant au pilote, en mode ultime de freinage, de doser l'effort de freinage.

A cet égard, le signal du levier peut être utilisé pour assurer la sélection entre les modes de freinage, évitant ainsi le recours à un interrupteur commandé inhibant la consigne de freinage normale pour signaler le mode de freinage ultime.

En effet, en supposant que le signal du levier est exploité conformément au schéma de la figure 2, l'utilisation d'un levier permet de déterminer à coup sûr quel est le mode de freinage à appliquer, selon les modalités suivantes :

| | Course du levier | Consigne de freinage normal | Consigne de parc |
|---|---|---|---|
| Mode normal | C=0 | Oui | non |
| Mode ultime | 0<C<Ccrit | Non | oui |
| Mode de parc | C>Ccrit | Non | oui |

Ainsi, le module de sélection 15 est capable de discriminer les modes de fonctionnement grâce au signal provenant du levier 16.

L'invention n'est pas limitée à ce qui vient d'être décrit, mais bien au contraire englobe toute variante entrant dans le cadre défini par les revendications.

L'invention n'est pas limitée à ce qui vient d'être décrit, mais bien au contraire englobe toute variante entrant dans le cadre défini par les revendications.

## Revendications

1. Système de freinage pour un aéronef à freins électriques comportant un certain nombre d'actionneurs électromécaniques (2), le système comportant un calculateur de freinage (20) délivrant une consigne de freinage normal (21) à destination d'un ou de plusieurs contrôleurs (10) des actionneurs, et des moyens de sélection (15) pour faire fonctionner le système de freinage selon plusieurs modes parmi lesquels :
- un mode normal de freinage lors duquel le calculateur de freinage génère une consigne de freinage normal (21) à destination du ou des contrôleurs ;
- un mode de freinage ultime, prioritaire sur le mode normal de freinage, appliqué en réponse à un actionnement d'un organe de commande de parc et dans lequel les actionneurs sont commandés pour appliquer un effort en réponse à l'actionnement de l'organe de commande de parc, mais ne sont pas bloqués en position ;
- un mode de freinage parc, appliqué en réponse à un actionnement d'un organe de commande de parc et uniquement si l'aéronef est à l'arrêt, dans lequel les actionneurs sont commandés pour appliquer un effort en réponse à l'actionnement de l'organe de commande de parc puis sont bloqués en position.

2. Système de freinage selon la revendication 1, dans lequel l'organe de commande de parc est un sélecteur de parc (12), et dans lequel les moyens de sélection (15) sélectionnent le mode de fonctionnement à appliquer en fonction de divers signaux parmi lesquels : la consigne de freinage normal (21), une consigne de parc (22) délivrée par une logique de parc (13) à laquelle est transmise un ordre de parc (23) lors d'un actionnement du sélecteur de parc, et un signal (17) représentatif de la vitesse de l'aéronef.

3. Système de freinage selon la revendication 1, dans l'organe de commande de parc est un levier de parc (12) délivrant un ordre de parc proportionnel à une course du levier, et dans lequel les moyens de sélection (15) sélectionnent le mode de fonctionnement à appliquer en fonction de divers signaux, parmi lesquels : la consigne de freinage normal (21), une consigne de parc (22) délivrée par une logique de parc (13) à laquelle est transmise un ordre de parc (23) lors d'un actionnement de l'organe de commande de parc, et l'ordre de parc.

## Patentansprüche

1. Bremssystem für ein Luftfahrzeug mit elektrischen Bremsen, umfassend eine bestimmte Anzahl von elektromechanischen Aktoren (2), wobei das System einen Bremsrechner (20) umfasst, der einen normalen Bremssollwert (21) an eine oder mehrere Steuerungen (10) der Aktoren liefert, sowie Auswahlmittel (15), um das Bremssystem gemäß mehreren Modi arbeiten zu lassen, darunter:
- ein normaler Bremsmodus, während dessen der Bremsrechner einen normalen Bremssollwert (21) für die Steuerung bzw. Steuerungen erzeugt;
- ein ultimativer Bremsmodus, der Vorrang vor dem normalen Bremsmodus hat und der in Antwort auf eine Betätigung eines Parksteuerorgans angewandt wird, und wobei die Aktoren gesteuert werden, um eine Kraft in Antwort auf die Betätigung des Parksteuerorgans auszuüben, aber nicht in ihrer Position blockiert werden;
- ein Parkbremsmodus, der in Antwort auf eine Betätigung eines Parksteuerorgans und nur angewandt wird, wenn das Luftfahrzeug still steht, wobei die Aktoren gesteuert werden, um eine Kraft in Antwort auf das Betätigen des Parksteuerorgans auszuüben, und dann in ihrer Position blockiert werden.

2. Bremssystem nach Anspruch 1, wobei das Parksteuerorgan ein Parkwähler (12) ist, und wobei die Auswahlmittel (15) den anzuwendenden Betriebsmodus in Abhängigkeit verschiedener Signale auswählen, darunter: normaler Bremssollwert (21), Parksollwert (22), der von einer Parklogik (13) geliefert wird, zu der ein Parkbefehl (23) während einer Betätigung des Parkwählers übertragen wird, und ein Signal (17), das repräsentativ für die Geschwindigkeit des Luftfahrzeugs ist.

3. Bremssystem nach Anspruch 1, wobei das Parksteuerorgan ein Parkhebel (12) ist, der einen Parkbefehl liefert, der proportional zu einem Hub des Hebels ist, und wobei die Auswahlmittel (15) den anzuwendenden Betriebsmodus in Abhängigkeit verschiedener Signale auswählen, darunter:
der normale Bremssollwert (21), ein Parksollwert (22), der von einer Parklogik (13) geliefert wird, zu der ein Parkbefehl (23) während einer Betätigung des Parksteuerorgans übertragen wird, und der Parkbefehl

## Claims

1. A braking system for an aircraft with electric brakes comprising a certain number of electromechanical actuators (2), the systems comprising a braking control unit (20) delivering a normal braking setpoint (21) for one or more controllers (10) of the actuators, and selection means (15) for causing the braking system to operate in a plurality of modes, including:
· a normal braking mode during which the braking control unit generates a normal braking setpoint (21) for the controller(s);
· an ultimate braking mode, having priority over the normal braking mode, that is applied in response to actuation of a parking control member, and in which the actuators are controlled to apply a force in response to the actuation of the parking control member, but in which they are not blocked in position; and
· a parking braking mode, applied in response to actuation of a parking control member and only if the aircraft is stationary, in which the actuators are controlled to apply a force in response to the parking control member being actuated and are then blocked in position.

2. A braking system according to claim 1, wherein the parking control member is a parking selector (12), and wherein the selection means (15) select the operating mode to apply as a function of various signals including:
the normal braking setpoint (21); a parking setpoint (22) delivered by parking logic (13) for which a parking order (23) is transmitted on actuation of the parking selector;
and a signal (17) representative of the speed of the aircraft.

3. A braking system according to claim 1, wherein the parking control member is a parking lever (12) delivering a parking order proportional to a stroke of the lever, and wherein the selection means (15) select the operating mode to be applied as a function of various signals, including: the normal braking setpoint (21); a parking setpoint (22) delivered by a parking logic (13) to which a parking order (23) is transmitted on actuation of the parking control member; and the parking order.
